# EUROPEAN PATENT APPLICATION

(11) **EP 4 734 229 A1**
(43) Date of publication of application: **29.04.2026**
(21) Application number: 25209995.7
(22) Date of filing: 21.10.2025
(51) Int. Cl.: H01M 10/613, H01M 10/625, H01M 10/647, H01M 10/6557, H01M 10/6567, H01M 50/209

(54) **ELECTRIC BATTERY PACK, WITH BATTERY CELLS IMMERSED IN A FLOW OF A TEMPERATURE-REGULATING LIQUID, AND WITH A HEAT EXCHANGER INTEGRATED WITHIN THE CONTAINER OF THE BATTERY PACK**

(30) Priority: 28.10.2024 IT 202400024000
(71) Applicant: C.R.F. Società Consortile per Azioni, 10043 Orbassano (Torino) (IT)
(72) Inventor: VURRO, Luca, I-10043 Orbassano (Torino) (IT); GARGANO, Marcello, I-10043 Orbassano (Torino) (IT); LORUSSO, Eligio, I-10043 Orbassano (Torino) (IT); ROSSI, Dario, I-10043 Orbassano (Torino) (IT); RICCO, Raffaele, I-10043 Orbassano (Torino) (IT)
(74) Representative: Buzzi, Notaro & Antonielli d'Oulx S.p.A.

(57) **Abstract**

An electric battery pack comprises a container (2) including a bottom wall (2A), side walls (2C) and an upper lid (2B). Within the container are disposed assemblies of battery cells (4) arranged side by side and spaced apart from one another. A temperature-regulating system uses a temperature-regulating liquid that flows from an inlet collector chamber (11) located below the battery cells (4), through the spaces (9) defined between the battery cells (4), into an outlet collector chamber (13) arranged above the battery cells (4). The temperature-regulating system includes a heat exchanger (6) to maintain the temperature of the temperature-regulating liquid within a determined range. The heat exchanger consists of a heat exchange plate (6), including one or more passages (15) for a secondary fluid, which is associated with the lid (C) or the bottom wall (2A) of the container (2), so that the flow of the temperature-regulating liquid comes into contact with the heat exchange plate (6) inside the container (2). In a preferred example, the heat exchange plate (6) is associated with the lid (C) of the container (2), in such a way as to constitute a lower wall of the outlet collector chamber (13) of the temperature-regulating liquid, and is furthermore arranged in contact with upper surfaces of the battery cells (4), in such a way that the heat exchange plate (6) is able to exchange heat both with the flow of the temperature-regulating liquid and with the battery cells (4) that are in contact with it.

## Description

### Field of the invention

The present invention relates to electric battery packs, in particular to electric battery packs for powering electric traction motors in electric or hybrid vehicles.

In particular, the invention concerns an electric battery pack, of the type comprising:
- a battery pack container, including a bottom wall, side walls and an upper lid,
- a plurality of groups of battery cells disposed within the container,
- wherein each group of battery cells comprises a plurality of battery cells arranged side by side and spaced apart from one another,
- wherein the battery pack is provided with a temperature-regulating system in which a temperature-regulating liquid can flow from an inlet collector chamber located below the battery cells, through the spaces defined between the battery cells, into an outlet collector chamber arranged above the battery cells,
- wherein said temperature-regulating system includes a pump for activating the circulation of the temperature-regulating liquid and a heat exchanger configured to maintain the temperature of the temperature-regulating liquid within a determined range, by means of a secondary fluid that exchanges heat with the temperature-regulating liquid in said heat exchanger.

### Prior art

Electric battery packs having the characteristics indicated above are known and have been used for some time.

The same Applicant has already proposed various solutions in this field. See, for example, the Italian patent applications 102023000022692, 102023000022698, 102023000022704, 102023000025884, 102024000002776, 102024000002779, 102024000004423, 102024000007807, 102024000007813, 102024000007816, 102024000007828, 102024000013039, 102024000013492, 102024000014308, 102024000014314, 102024000014326, 102024000015637, 102024000016354, 102024000016933, all still not available to the public at the priority date of the present invention.

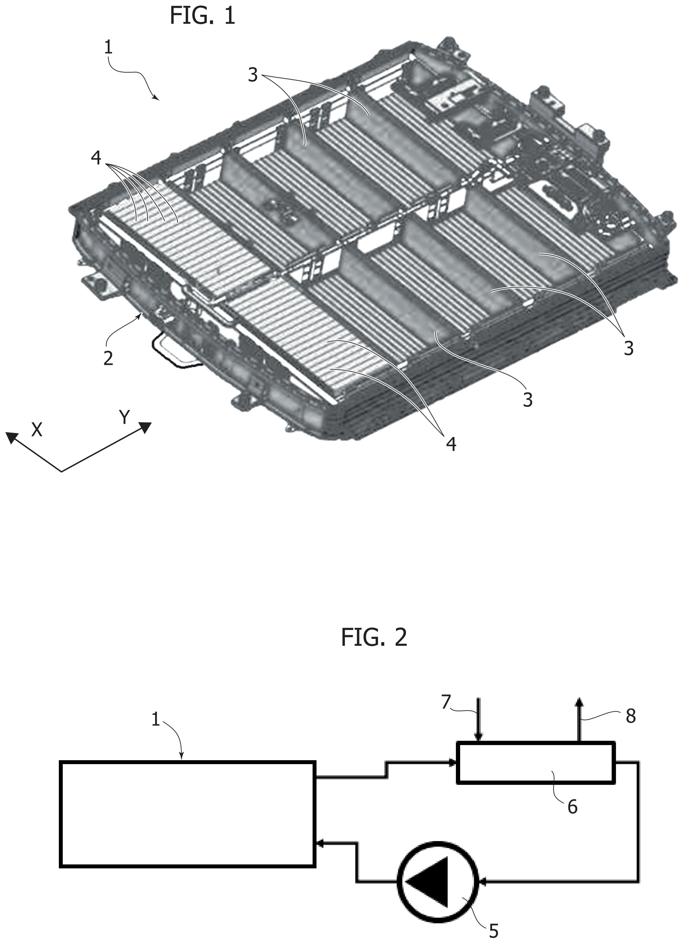

Figure 1 of the attached drawings shows a battery pack of the type that was the subject of studies and experiments conducted by the Applicant prior to the present invention. The battery pack, indicated in its entirety by 1, comprises a container 2 closed by an upper lid, which has been removed in figure 1 to show the inside of the container. Inside the container 2 is arranged a frame including a plurality of partition walls 3 that define a plurality of compartments (in this example ten compartments are provided) each intended to receive an assembly of battery cells arranged side by side along a horizontal direction X and kept spaced apart from one another by respective spacer frames (not visible in figure 1).

For convenience of illustration, in figure 1 only the cells 4 that fill two of the ten compartments provided in the battery pack 1 have been shown.

The battery pack 1 uses prismatic-type battery cells 4, each having two opposite main faces, which are arranged orthogonally to the direction X, a pair of vertical end surfaces and a pair of horizontal end surfaces.

In the example illustrated in figure 1, the different assemblies of cells 4 are arranged in two rows parallel to a horizontal direction Y orthogonal to the horizontal direction X.

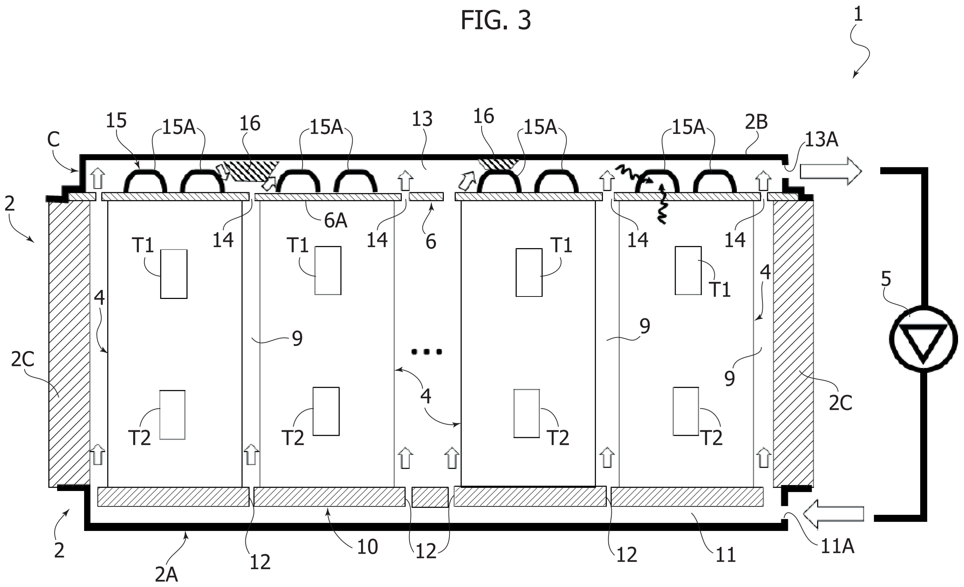

The battery pack 1 illustrated in figure 1 is of the type including a distribution system in which a temperature-regulating liquid (usually a dielectric oil) can flow inside the battery pack, in contact with the battery cells. The distribution system of the temperature-regulating liquid comprises an inlet collector chamber for the temperature-regulating liquid (not visible in figure 1, and indicated by 11 in figure 3 relating to the present invention) which is arranged below the battery cells 4, between the battery cells and the bottom wall of the container 2. The container 2 has an inlet opening (also not visible in figure 1) through which the temperature-regulating liquid enters the inlet collector chamber below the battery cells 4. From the inlet collector chamber 4, the temperature-regulating liquid flows through the spaces between the cells 4 into an outlet collector chamber for the temperature-regulating liquid (not visible in figure 1 and indicated by 13 in figure 3 relating to the present invention) which is arranged above the battery cells 4. The temperature-regulating liquid exits the container 2 through an outlet opening (not illustrated) communicating with the outlet collector chamber.

Figure 2 of the attached drawings is a schematic of the temperature-regulating liquid circuit according to the prior art. In known solutions, the circuit comprises a part outside the battery pack 1 including an electric pump 5 for activating the circulation of the temperature-regulating liquid, and a heat exchanger 6 in which the temperature-regulating liquid coming from the battery pack 1 exchanges heat with a secondary fluid that enters the heat exchanger 6 coming from a line 7 and exits the heat exchanger 6 through a line 8. The details relating to the circuit of the secondary fluid that passes through the heat exchanger 6 are not described here, as they are implemented in any known manner and also to simplify the drawings. For example, the secondary fluid passing through the heat exchanger 6 can be a coolant that flows in a cooling circuit of any known type.

The temperature-regulating system serves to maintain the battery cells within a determined temperature range, for example between -12 °C and 55°C. In the most common case, the temperature-regulating system serves to exert a cooling action on the battery pack during the discharge and charge cycles to which it is subjected during the use of an electric vehicle. The heat exchanger 6 in turn serves to cool the temperature-regulating liquid that exits the battery pack 1 after having cooled the battery cells.

A first significant drawback of the known solutions of the type described above lies in the fact that the heat exchanger is an external component that occupies space in the vehicle and constitutes an additional component of non-negligible cost. Furthermore, the heat exchanger performs the sole function of thermal regulation of the dielectric liquid. A further drawback lies in the fact that the connecting pipes between the battery pack and the heat exchanger and between the heat exchanger and the pump can have a significant length, given that the heat exchanger can be in a remote position relative to the battery pack, which gives rise to thermal dissipations and consequent energy losses. Furthermore, the connecting pipes are subject to the risk of breakage.

There is therefore a perceived need for further improvements in this field.

Further known solutions in this field are described in documents CN 106 356 584 A, CN 221 126 048 U, CN 219 329 309 U and CN 117 832 671 A.

### Object of the invention

It is an object of the invention to produce an electric battery pack of the type indicated at the beginning of the present description that is simpler and more compact compared to known solutions and which at the same time is characterized by greater efficiency of the temperature-regulating system.

### Summary of the invention

With a view to achieving the aforesaid object, the invention has for its object an electric battery pack having the characteristics that have been indicated at the beginning of the present description and further characterized in that the heat exchanger consists of a heat exchange plate, including one or more passages for said secondary fluid, and which is associated with the lid or the bottom wall of the battery pack container, in such a way as to constitute a wall of the outlet collector chamber of the temperature-regulating liquid or a wall of the inlet collector chamber of the temperature-regulating liquid, so that, in operation, the flow of the temperature-regulating liquid comes into contact with said heat exchange plate inside the container.

In a preferred form of embodiment, the heat exchange plate is associated with the lid of the container, in such a way as to constitute a lower wall of the outlet collector chamber of the temperature-regulating liquid, and is furthermore arranged in contact with upper surfaces of the battery cells, in such a way that said heat exchange plate is able to exchange heat both with the flow of the temperature-regulating liquid and with the battery cells that are in contact with it.

In one example, the heat exchange plate has a lower side in contact with the upper surfaces of the battery cells and an upper side facing the outlet collector chamber of the temperature-regulating liquid on which one or more passages for said secondary fluid are defined.

In an embodiment, the heat exchange plate includes a metal base sheet having a lower surface in contact with the upper surfaces of the battery cells, and an upper surface on which one or more serpentine conduits for the passage of said secondary fluid are secured. The base plate has a plurality of holes for the communication of the spaces between the battery cells and the outlet collector chamber.

In a further example, between the upper wall of the outlet collector chamber and the heat exchange plate are interposed elastic elements which, in the assembled condition of the battery pack, are subjected to compression, so as to maintain the heat exchange plate pressed against the upper surfaces of the battery cells so as to reduce the thermal contact resistance and increase the heat exchange with the cells.

In a variant, the heat exchange plate is associated with the bottom wall of the container and constitutes a lower wall of said inlet collector chamber of the temperature-regulating liquid.

Thanks to the aforementioned characteristics, the invention achieves several advantages. Firstly, the heat exchanger is not arranged outside the battery pack, so it does not occupy space in the vehicle. The connecting pipes of the heat exchanger are also eliminated, which further reduces the occupied space and avoids any risk of failure due to a breakage of the pipes. A consequent reduction in weight and a reduction in production cost are also obtained.

The preferred form of embodiment of the invention, which provides for integrating the heat exchange plate into the lid of the battery pack container, achieves the further advantage of also obtaining a further thermal control action on the battery cells, since the heat exchange plate is in direct contact with the upper surfaces of the battery cells. The efficiency of the temperature-regulating system is therefore increased, thanks to the fact that the temperature-regulating system becomes a hybrid system, which exploits both the contact of the battery cells with the flow of the temperature-regulating liquid and the direct contact of the battery cells with the heat exchange plate (which performs a double function). Unlike a standard temperature-regulating system with a cooling plate that uses only one side of the plate for heat exchange, said hybrid system allows dissipating the thermal power generated by the battery cells using a very extensive heat exchange surface because the plate is in direct contact with the cells and the temperature-regulating fluid flows over the plate from both sides. The proposed solution, therefore, allows using both surfaces of the plate actively for temperature regulation.

In the form of embodiment wherein the heat exchange plate is associated with the upper wall of the battery pack container, the thermal gradient inside each battery cell along the vertical direction is more homogeneous compared to known solutions, since the battery cells receive the relatively cold temperature-regulating liquid in the lower part and are also cooled by the heat exchange plate in the upper part.

In addition to the greater efficiency of the temperature-regulating system, the invention also allows an improvement regarding the ease of assembly of the battery pack and the related heat exchanger, precisely because the latter is integrated into the lid of the battery pack. A further advantage of the solution with the heat exchange plate associated with the container lid lies in the fact that in the contact between the heat exchange plate and the upper surfaces of the battery cells it is not necessary to provide an additional material acting as a thermal interface (the so-called TIM, "Thermal Interface Material") since the dielectric oil that fills the battery pack container performs this function by filling the voids determined by surface irregularities in the contact between the plate and the cells while maintaining an extremely reduced fluid film thickness that does not generate a high thermal resistance to heat exchange between the plate and the cells.

### Brief description of the figures

Further characteristics and advantages of the invention will result from the following description with reference to the attached drawings, provided by way of non-limiting example, wherein:
- figure 1 is a perspective view of a known type of battery pack, with the container lid removed, and with part of the battery cells removed,
- figure 2 is a schematic of a temperature-regulating system of a battery pack according to the prior art,
- figure 3 is a schematic sectional view of a form of embodiment of the battery pack according to the invention,
- figure 4 is a schematic of a temperature-regulating system of a battery pack according to the invention,
- figures 5, 6 are further sectional schematics of the battery pack of figure 3,
- figure 7 is a plan view of a heat exchange plate used in the battery pack according to the invention,
- figure 7A shows a detail of figure 7, on an enlarged scale,
- figure 8 is a perspective view of a battery pack according to the invention, with the upper wall of the lid removed,
- figure 9 is a perspective view of a battery pack according to the invention, complete with lid,
- figure 10 is a bottom plan view of the heat exchange plate of figure 7,
- figure 11 is a perspective view similar to that of figure 8, wherein the flow lines of the temperature-regulating liquid through the upper chamber adjacent to the heat exchange plate are shown,
- figure 12 is a partial sectional view of the battery pack according to the invention, along line XII-XII of figure 7,
- figure 12A is a partial sectional view of the battery pack according to the invention, along line XIII-XIII of figure 7,
- figure 13 illustrates a variant of figure 7, and
- figures 14, 15 are a plan view and a sectional view of a further form of embodiment wherein the heat exchange plate is integrated into the lower wall of the battery pack container.

### Detailed description of the invention

Figures 1, 2 have already been described above. In figures 3-15, parts common with those of figures 1, 2 are indicated by the same references.

A first form of embodiment of the battery pack according to the invention is illustrated schematically in figure 3. This solution refers to an application wherein the battery cells 2 each have the two positive and negative poles T1, T2 on a vertical end face of the cell.

In figure 3, the container 2 of the battery pack is illustrated schematically and includes, according to conventional technique, a bottom wall 2A, an upper wall 2B, forming part of the lid C of the container, and four side walls 2C (only two of which are visible in the figure).

For greater simplicity, figure 3 illustrates only the two cells 4 located at each end of the cell assembly.

According to conventional technique, the cells 2 are arranged side by side and spaced apart from one another (by means of spacer frames not illustrated), so as to define spaces 9 between one cell and another.

Also according to the known technique, the cells 2 are supported on a wall 10 which is spaced from the bottom wall 2A of the container, so as to define an inlet collector chamber 11 for the temperature-regulating liquid.

The inlet collector chamber 11 communicates with the spaces 9 between the cells as well as with the spaces 9 arranged between each end of the cell assembly and the side walls 2C, via a plurality of passages 12 which, in this example, are formed in the base plate 10.

According to a characteristic already present in solutions previously proposed by the same Applicant, the passages 12 that put the inlet collector chamber 11 in communication with the spaces 9 between the cells are relatively narrow passages, dimensioned so as to offer a resistance to the flow of the temperature-regulating liquid sufficient to prevent the temperature-regulating liquid from tending to flow more in the spaces that are closer to the inlet and outlet formed in the container 2 for the temperature-regulating liquid.

Also in accordance with what was already provided in solutions previously proposed by the same Applicant, the lid C of the container 2 defines internally an outlet collector chamber 13 for the temperature-regulating liquid. The lower wall of the lid C, which will be described in detail hereinbelow, has passages 14 for the communication of the outlet collector chamber 13 with the spaces 9 between the cells.

Similarly to the known solution illustrated in figure 2, an electric pump 5 is provided outside the battery pack 1 to activate the circulation of the temperature-regulating liquid, which is typically a dielectric oil. The temperature-regulating liquid supplied by the pump 5 enters the inlet collector chamber 11 through an inlet opening 11A, and distributes uniformly, through the restricted holes 12, into the spaces 9 between the cells 4. The temperature-regulating liquid travels upward through the spaces 9 between the cells to then pass into the outlet collector chamber 13 through the passages 14. The temperature-regulating liquid exits the outlet collector chamber 13 through an outlet opening 13A to return to the pump 5.

During normal discharge and charge cycles of the battery pack in an electric vehicle, the battery cells tend to increase in temperature, due to the chemical reaction inside each cell. The temperature-regulating liquid removes heat from the battery cells by coming into direct contact with them and then exiting the battery pack again.

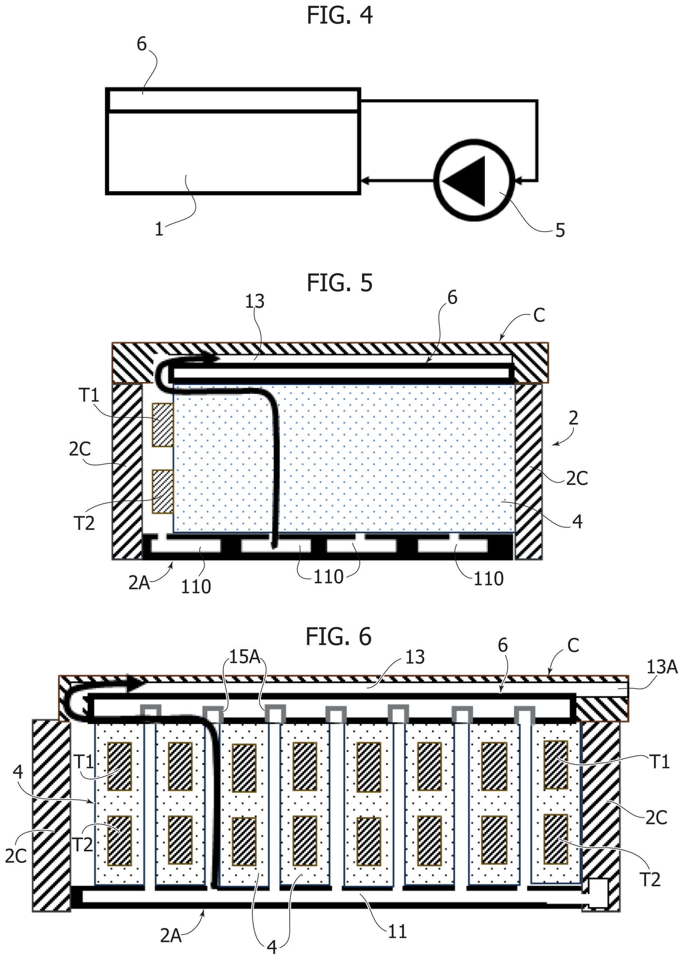

The heat exchanger 6, which in known solutions (see figure 2) is provided outside the battery pack, is instead provided inside the container 2 in the battery pack according to the invention, as schematized in figure 4. More particularly, the heat exchanger 6 is integrated into a wall of the container. As in figure 2 relating to the prior art, also in figures 4-15 the details relating to the circuit of the secondary fluid that passes through the heat exchanger 6 are not illustrated, as they can be implemented in any known way and because the elimination of these details from the drawings makes the latter more readily and easily understandable. The circuit for the secondary fluid can remain completely identical to that used in the known system of figure 2. The details of this circuit do not form part, taken by themselves, of the present invention.

Figure 3 refers to a preferred form of embodiment of the invention wherein the heat exchanger is integrated into the lid C of the battery pack container.

In all forms of embodiment of the invention, the heat exchanger 6 consists of a heat exchange plate, including a metal base sheet 6A, and at least one serpentine conduit 15, whose coils are indicated by 15A (see also figure 6) which is secured (for example by welding) to the upper surface of the base sheet 6A. The serpentine conduit 15 is traversed by a secondary fluid that exchanges heat with the flow of the temperature-regulating liquid.

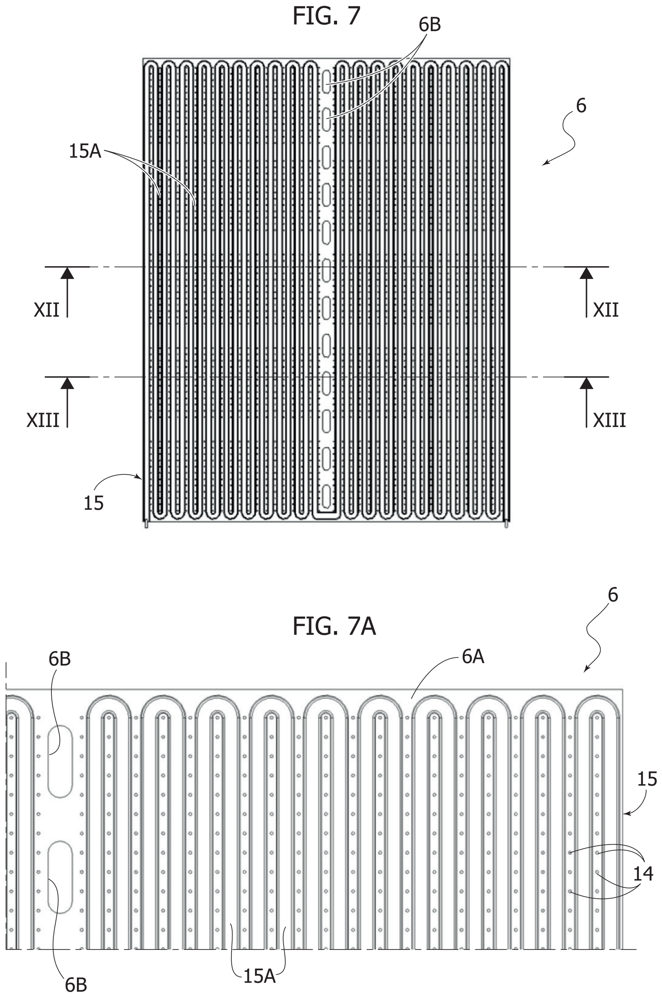

In the preferred form of embodiment, the heat exchange plate 6 constitutes the lower wall of the lid C, so that the outlet collector chamber 13 is delimited superiorly by the upper wall 2B of the lid C and inferiorly by the heat exchange plate 6. The base sheet 6A is directly supported on the upper surfaces of the battery cells 4. In the base sheet 6A are formed the communication passages 14, for the temperature-regulating liquid, in the areas of the sheet 6A not occupied by the coils 15A of the serpentine conduits (see figure 7A).

The micro-spaces due to surface irregularities, in the contact between the sheet 6A and the cells 4, are filled by the dielectric oil in which the cells are immersed, so that it is not necessary to provide material acting as a thermal interface between the sheet 6A and the cells 4.

Thanks to the arrangement described above, the heat exchange plate 6 performs a double function. On one hand, it performs the function of the heat exchanger 6 in the known system illustrated in figure 2, which is to bring the temperature of the temperature-regulating liquid back into a determined range, after the temperature-regulating liquid has passed through the battery pack. On the other hand, the heat exchange plate 6 also performs the function of directly cooling by conduction the battery cells 4 with which it is in contact.

The temperature-regulating function is generally a cooling function during the normal discharge and charge cycles to which the battery pack is subjected during the use of an electric vehicle. However, the temperature-regulating function can also consist of a heating action, for example in the case of activation of the electric vehicle after a long stop in an environment having a low temperature below -10 °C or in the case of charging if the temperature of the battery mass is lower than that of maximum charging efficiency (typically around 10-15°C).

Figures 5, 6 are further sectional views of a battery pack of the type illustrated in figure 3 which show the path that can be followed by the temperature-regulating liquid through the battery pack. Figure 5 shows that the inlet collector chamber 11 can be subdivided into several separate channels 110.

Figure 7 is a plan view of the heat exchange plate 6, including the base sheet 6A and a serpentine 15. The coils 15A of the serpentines 15 are configured so as to leave sufficient space for the passage holes 14 between the branches of the coils and for a series of apertures 15B communicating with a central outlet conduit for the temperature-regulating liquid from the battery pack.

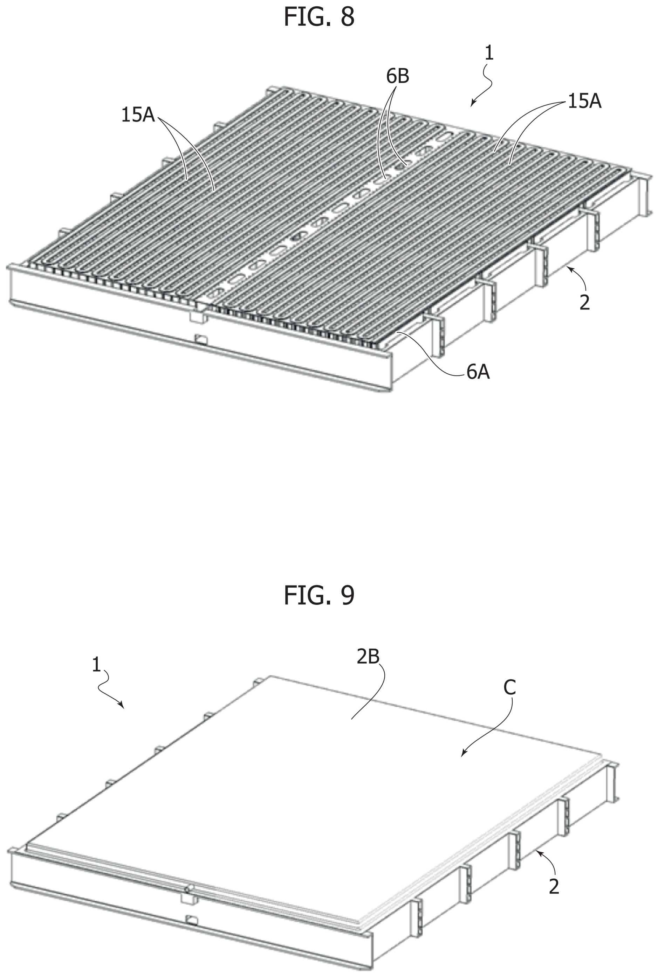

Figure 8 illustrates a perspective view of the battery pack according to the invention, wherein the upper wall 2B forming part of the lid C has been removed. The figure shows the container 2 on which the heat exchange plate 6 is supported, including the base sheet 6A and the serpentine 15.

Figure 8 is a bottom plan view of the heat exchange plate 6, which shows the holes 14 for the communication of the spaces 9 between the cells with the outlet collector chamber 13. Figure 9 shows the same perspective view as figure 8, completed with the upper wall 2B of the lid C.

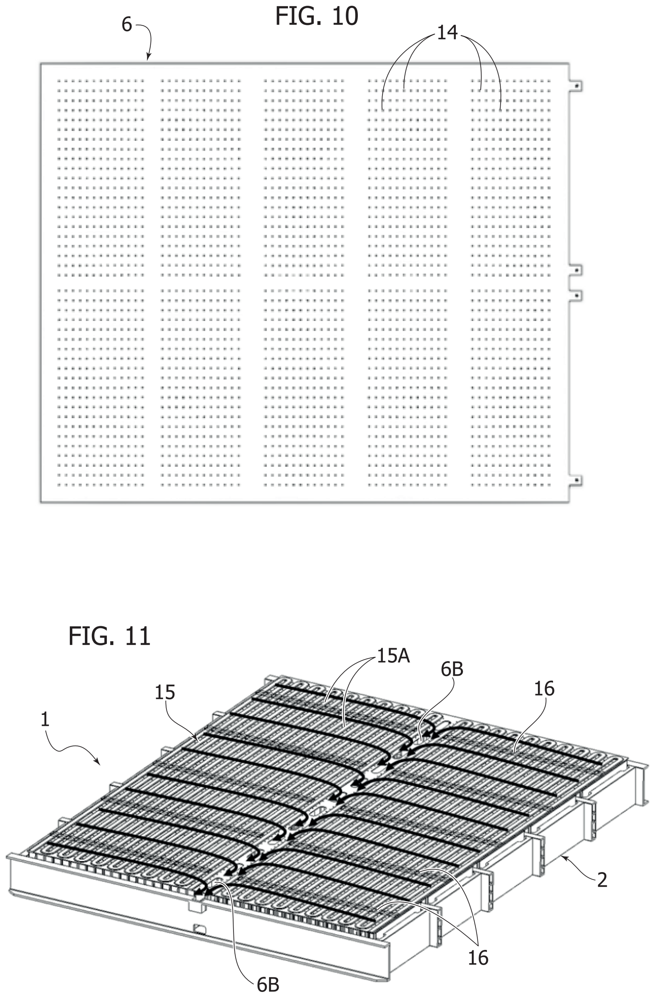

Figure 10 is a bottom plan view of the sheet 6A which shows the holes 14.

The secondary fluid that traverses the serpentine 15 is chosen according to any known technique and can be for example a mixture of water and glycol or a refrigerant.

Figure 11 is a perspective view similar to that of figure 8, wherein the flow lines of the temperature-regulating liquid through the upper chamber adjacent to the heat exchange plate are shown. The temperature-regulating liquid flows transversely from the two sides of the upper chamber 13 towards the center of the chamber, where it passes through a series of apertures 6B to converge into a central conduit that carries the temperature-regulating liquid out of the battery pack.

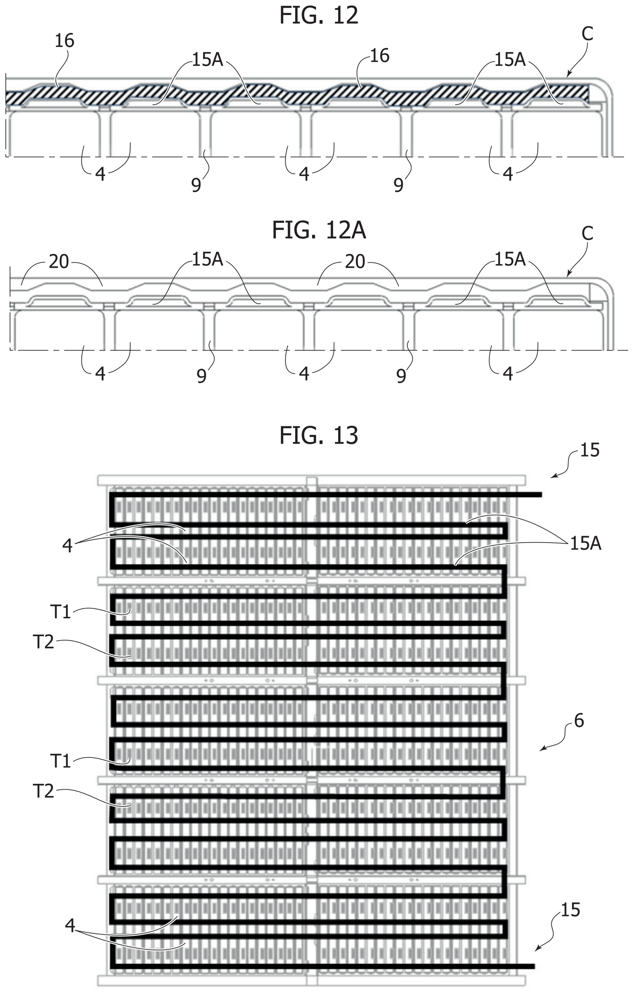

The temperature-regulating liquid is forced to flow transversely in the directions indicated in figure 11 by a plurality of beads 16 of elastomeric material (see figures 11, 12) which are interposed between the upper wall 2B of the lid C and the heat exchange plate 6 and which are subjected to compression in the assembled condition of the battery pack. In this way, in addition to acting as sealing elements to direct the flow of the temperature-regulating liquid in the transverse directions illustrated in figure 11, the elastic elements 16 also have the function of ensuring that the heat exchange plate 6 is pressed into contact with the battery cells 4, in order to obtain the highest possible efficiency in the heat exchange by conduction between the plate 6 and the cells 4.

As shown in figure 12A, the lower surface of the upper wall 2B is shaped with protrusions 20 in correspondence with the spaces between the coils 15A of the serpentine conduits 15, so as to define a consequently reduced volume of the outlet collector chamber 13. In this way, the quantity of temperature-regulating liquid required is reduced.

Figure 13 is a variant of figure 7 which refers to the case wherein the battery cells 2 have the poles T1, T2 on their upper face. In this case, the base sheet 6A has holes into which the poles T1, T2 are inserted, and the coils 15A of the serpentine conduits 15 are arranged in a direction orthogonal to that of figure 6, in the free spaces between the poles T1, T2.

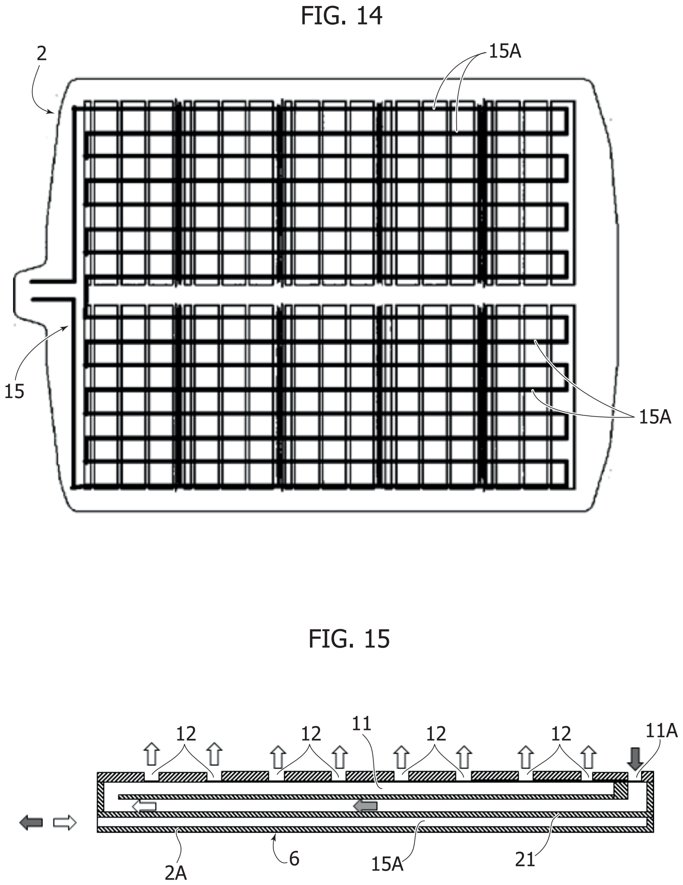

Figures 14, 15 refer to a second form of embodiment, wherein the heat exchange plate 6 is integrated into the bottom wall 2A of the container 2. In the illustrated example (see figure 15) a single serpentine conduit 15 is provided, defining a plurality of coils 15A which are in contact with a wall 21 defining the lower wall of the inlet collector chamber 11. The inlet collector chamber 11 then communicates with the spaces 9 between the cells (not illustrated in figure 15) via the passages 12 formed in the plate 10 on which the cells are supported. In this case, the heat exchange plate 6 performs only a function of heat exchange with the flow of the temperature-regulating liquid and does not perform the function of direct heat exchange with the battery cells 4.

Naturally, the principle of the invention remaining unchanged, the forms of embodiment and the construction details may vary widely with respect to what has been described and illustrated by way of example only, without thereby departing from the scope of the present invention, as defined in the appended claims.

## Claims

1. Electric battery pack, comprising:
- a battery pack container (2), including a bottom wall (2A), side walls (2C) and an upper lid (C),
- a plurality of groups of battery cells (4) disposed within the container (2),
- wherein each group of battery cells (4) comprises a plurality of battery cells (4) arranged side by side and spaced apart from one another,
- wherein the battery pack (1) is provided with a temperature-regulating system in which a temperature-regulating liquid can flow from an inlet collector chamber (11) located below the battery cells (4), through the spaces (9) defined between the battery cells (4), into an outlet collector chamber (13) arranged above the battery cells (4),
- wherein said temperature-regulating system includes a pump (5) for activating the circulation of the temperature-regulating liquid and a heat exchanger (6) configured to maintain the temperature of the temperature-regulating liquid within a determined range, by means of a secondary fluid that exchanges heat with the temperature-regulating liquid in said heat exchanger (6),
said battery pack being **characterized in that** the heat exchanger consists of a heat exchange plate (6), including one or more passages (15) for said secondary fluid, which is associated with the lid (C) or the bottom wall (2A) of the battery pack container (2), in such a way as to constitute a wall of the outlet collector chamber (13) of the temperature-regulating liquid or a wall of the inlet collector chamber (11) of the temperature-regulating liquid, so that, in operation, the flow of the temperature-regulating liquid comes into contact with said heat exchange plate (6) inside the container (2).

2. Battery pack according to claim 1, wherein said heat exchange plate (6) is associated with the lid (C) of the container (2), in such a way as to constitute a lower wall of the outlet collector chamber (13) of the temperature-regulating liquid, and is furthermore arranged in contact with upper surfaces of the battery cells (4), in such a way that said heat exchange plate (6) is able to exchange heat both with the flow of the temperature-regulating liquid and with the battery cells (4) that are in contact with it.

3. Battery pack according to claim 2, wherein said heat exchange plate (6) has a lower side in contact with the upper surfaces of the battery cells (4) and an upper side facing the outlet collector chamber (13) of the temperature-regulating liquid, on which one or more passages (15) for said secondary fluid are defined.

4. Battery pack according to claim 3, wherein the heat exchange plate (6) includes a metal base sheet (6A) having a lower surface in contact with the upper surfaces of the battery cells (4) and an upper surface on which one or more serpentine conduits (15) for the passage of the secondary fluid are secured, said base sheet (6A) having a plurality of holes (14) for the communication of the spaces (9) between the battery cells (4) and the outlet collector chamber (13).

5. Battery pack according to claim 4, wherein between the upper wall (2B) of the outlet collector chamber (13) and the heat exchange plate (6) are interposed elastic elements (16) which, in the assembled condition of the battery pack (1), are subjected to compression, so as to maintain the heat exchange plate (6) pressed against the upper surfaces of the battery cells (4).

6. Battery pack according to claim 4, wherein the upper wall (2B) of the outlet collector chamber (13) has a lower surface shaped with protrusions in correspondence with the spaces between the coils (15A) of the serpentine conduits (15), so as to define a consequently reduced volume of the outlet collector chamber (13).

7. Battery pack according to claim 4, wherein the battery cells (4) each have a positive pole (T1) and a negative pole (T2) protruding from a vertical surface of the cell.

8. Battery pack according to claim 4, wherein the battery cells (4) each have the positive and negative poles (T1, T2) protruding from the upper surface of the cell and received within corresponding holes of said base sheet (6A) of the heat exchange plate (6).

9. Battery pack according to claim 1, wherein said heat exchange plate (6) is associated with the bottom wall (2A) of the container and constitutes a lower wall of said inlet collector chamber (11) of the temperature-regulating liquid.
